**Europäisches Patentamt**

**European Patent Office**

**Office européen des brevets**

(19)

(11) Veröffentlichungsnummer: **0 022 585**
**B1**

(12) **EUROPÄISCHE PATENTSCHRIFT**

(45) Veröffentlichungstag der Patentschrift:
**02.11.83**

(51) Int. Cl.³: **F 02 B 37/12**

(21) Anmeldenummer: **80200488.7**

(22) Anmeldetag: **23.05.80**

(54) Bypasssteuereinrichtung für turboaufgeladene Verbrennungsmotoren.

(30) Priorität: **11.07.79 CH 6464/79**

(43) Veröffentlichungstag der Anmeldung:
**21.01.81 Patentblatt 81/3**

(45) Bekanntmachung des Hinweises auf die Patenterteilung:
**02.11.83 Patentblatt 83/44**

(84) Benannte Vertragsstaaten:
**CH DE FR GB LI**

(56) Entgegenhaltungen:
**FR - A - 1 347 532**
**FR - A - 2 308 792**
**US - A - 3 102 381**
**US - A - 3 163 984**

**W. Oppelt, Kleines Handbuch technischer**
**Regelvorgänge, 5. Auflage, Seite 250**

(73) Patentinhaber: **BBC Aktiengesellschaft Brown, Boverl & Cie., Haselstrasse, CH-5401 Baden (CH)**

(72) Erfinder: **Zumstein, Bruno, Dipl.-Ing., Sonnenbergstrasse 27, CH-6005 Luzern (CH)**

Bypasssteuereinrichtung für turboaufgeladene Verbrennungsmotoren

Die vorliegende Erfindung betrifft eine Bypasssteuereinrichtung für turboaufgeladene Verbrennungsmotoren nach dem Oberbegriff des Patentanspruchs.

Mit Bypasseinrichtungen lässt sich bekanntlich das Teildrehzahlverhalten turboaufgeladener Verbrennungsmotoren verbessern. Dabei wird ein vom jeweiligen Betriebszustand des Motors abhängiger Anteil der verdichteten Ladeluft über eine Bypassleitung an eine vor der Abgasturbine liegende Stelle der Abgasleitung zurückgeführt. Auf diese Weise erhält der Motor einen höheren Ladedruck als bei Turboaufladung ohne Bypass. Zu diesem Zweck weist die Bypasseinrichtung ein Bypassventil auf, das durch irgendeine motordrehzahlabhängige Grösse als Führungsgrösse gesteuert werden kann. Die Ventilerhebung im Bypass verläuft dabei so, dass im Leerlauf- und im unteren Teillastbereich eine grosse und mit zunehmender Drehzahl eine immer weiter abnehmende Luftmenge überströmt, bis nahe der Nenndrehzahl das Ventil ganz schliesst und das Überströmen von Bypassluft unterbunden wird.

Bei einer bekannten Bypasseinrichtung wird beispielsweise als Führungsgrösse zur Steuerung des Bypassluftstromes die über dem Bypass herrschende Druckdifferenz zwischen der verdichteten Ladeluft und dem Auspuff am Turbineneintritt im Verhältnis zum Ladedruck verwendet.

Es wurde auch schon vorgeschlagen, siehe diesbezüglich die US-A-3 163 984, die Motordrehzahl als Führungsgrösse zu verwenden, doch ist die dort beschriebene Lösung konstruktiv aufwendig und dürfte dementsprechend teuer sein.

Die im kennzeichnenden Teil des Patentanspruchs 1 definierte Erfindung entstand aus der Aufgabenstellung, eine Bypasssteuereinrichtung von demgegenüber einfacherem Aufbau zu schaffen, bei der die Motordrehzahl ebenfalls als Führungsgrösse benutzt wird. Der Grund dafür war die vorzugsweise für Fahrzeugmotoren geplante Verwendung dieser Einrichtung, wofür sich die Motordrehzahl als Führungsgrösse besonders gut eignet, wobei aber die Betriebssicherheit im praktischen Fahrbetrieb gewährleistet sein muss.

Die Erfindung wird im folgenden unter Bezugnahme auf das in der Zeichnung dargestellte Ausführungsbeispiel näher beschrieben. In der Zeichnung stellen dar:

Fig. 1 einen Turboladermotor mit einer Bypasseinrichtung und

Fig. 2 die dafür vorgesehene erfindungsgemässe Bypasssteuereinrichtung.

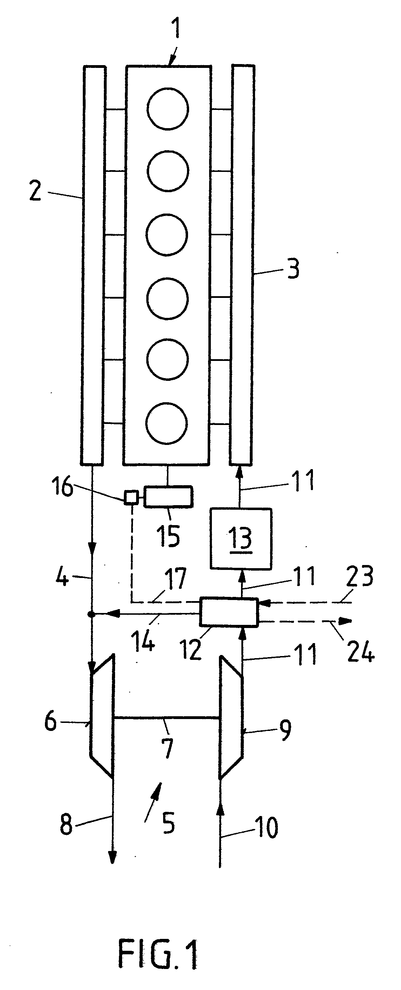

Der in Fig. 1 schematisch dargestellte Sechszylinderturboladermotor 1 weist einen Abgassammler 2 und einen Ladeluftaufnehmer 3 auf. Die Abgase gelangen über ein Abgasrohr 4 in die Abgasturbine 6 des Turboladers 5 und verlassen sie durch ein Auspuffrohr 8. Die Abgasturbine 6 ist durch eine Welle 7 mit dem Verdichter 9 verbunden, der durch eine Ansaugleitung 10 Luft ansaugt und sie verdichtet über eine Ladeluftleitung 11 durch das Bypasssteuergehäuse 12 in einen Ladeluftkühler 13 und weiter in den Ladeluftaufnehmer 3 drückt, aus dem die Zylinder ihre Verbrennungsluft erhalten. Die Bypassleitung 14 verbindet das Bypasssteuergehäuse 12 mit einer Stelle des Abgasrohres vor dem Eintritt in die Turbine 6. Zur Bypasseinrichtung gehört ferner ein vom Schwungrad 15 antreibbarer elektrischer Drehzahlgeber mit Verstärker 16, der Strom zur Drehzahlanzeige und zur Betätigung eines Proportionalmagneten liefert, sowie eine Signalleitung 17 zwischen dem Drehzahlgeber 16 und dem Steuergehäuse 12.

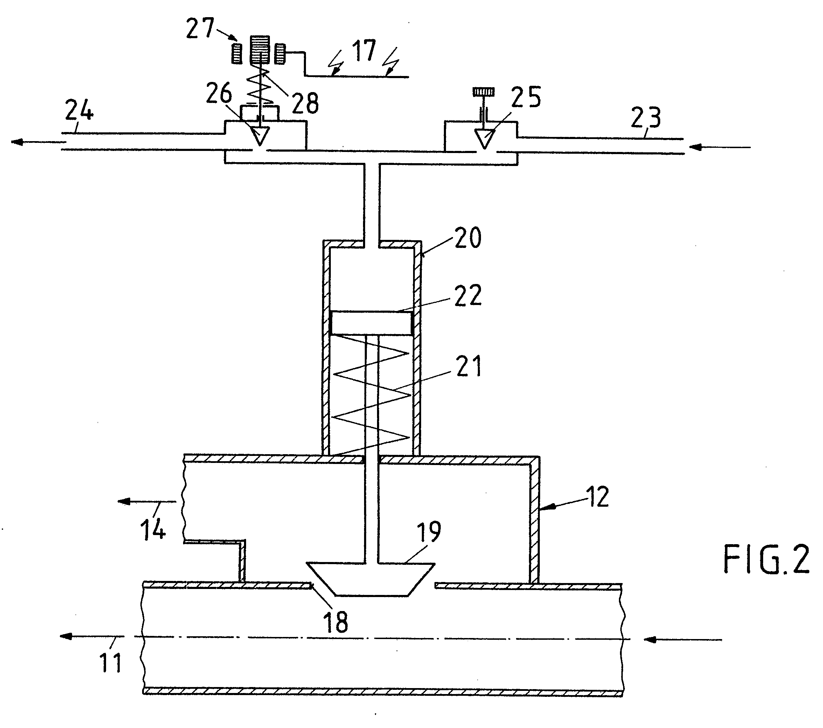

Die Bypasssteuereinrichtung ist in Fig. 2 schematisch dargestellt. Das Steuergehäuse 12 steht über eine Ventilöffnung 18 mit der Ladeluftleitung 11 und über die Bypassleitung 14 mit dem Abgasrohr 4 in Verbindung. Das mit der Ventilöffnung 18 zusammenwirkende Bypassventil 19 ist als Tellerventil ausgebildet, das am oberen Ende seines Ventilschaftes einen in einem Betätigungszylinder 20 verschiebbaren, durch eine Druckfeder 21 belasteten Kolben 22 aufweist.

Die Einrichtung benutzt als Arbeitsmittel für die Steuerung ein Fluid unter etwa konstantem Druck, wie z.B. Luft aus einem Druckluftnetz, Öl aus elnem Hydraulikaggregat oder auch aus dem Schmierölkreislauf des Motors. Die Zuleitung und die Ableitung des Arbeitsmittels sind in den beiden Figuren mit 23 bzw. 24 bezeichnet.

Im Abschnitt der Arbeitsmittelleitung zwischen Zuleitung 23 und Ableitung 24 befinden sich ein für einen bestimmten Motor fest einstellbares Drosselventil 25, das den maximalen Massenstrom des Arbeitsmittels durch das Ventil begrenzt, sowie ein Steuerdrosselventil 26, das drehzahlabhängig den Strömungsquerschnitt durch seinen Sitz und damit den Arbeitsmitteldruck zwischen den beiden Drosseln 25 und damit über dem Kolben 22 des Betätigungszylinders 20 steuert. Durch entsprechende Einstellung des Drosselventils 25 lassen sich der für einen gegebenen Motor erforderliche Druck im Betätigungszylinder 20 und damit die Stellkräfte für die Betätigung des Bypassventils 19 einstellen.

Die drehzahlabhängige Betätigung des Steuerdrosselventils 26 erfolgt durch den Proportionalmagneten 27, dessen mit dem Ventil 26 starr verbundener Anker mit zunehmender Stärke des durch die Signalleitung 17 vom Signalgeber 16 her übertragenen Signals gegen den Widerstand einer Druckfeder 28 weiter in den Stator hineingezogen wird, bis es nahe der Höchstleistungsdrehzahl des Motors den Drosselquerschnitt ganz schliesst. Damit wird die Stellkraft auf den Kolben 22 ein Maximum, somit das Bypassventil 19 ganz geschlossen, das Überströmen von verdichteter Ladeluft gänzlich unterbunden.

Das vom Signalgeber 16 erzeugte Ausgangssignal wird vom Verstärker in eine drehzahlproportionale Spannung umgewandelt, die vom Proportionalmagneten 27 in die gewünschte drehzahlabhängige Verstellung des Steuerdrosselventils 26 sowie des Bypassventils 19 und damit des Bypassstromes umgesetzt wird.

Um eine Rezirkulation der Abgase in der Startphase und bei kleiner Leistung zu vermeiden, kann der Verstärker des Signalgebers durch ein Element erweitert werden, das dafür sorgt, dass das Bypassventil im untersten Drehzahlbereich geschlossen bleibt.

In die Steuerung könnte auch ein Mikroprozessor integriert werden, mit dem sich eine beliebige, von der Motordrehzahl eindeutig abhängige Ventilerhebungskurve verwirklichen lässt.

Bezeichnungsliste
1 Sechszylinderturboladermotor
2 Abgassammler
3 Ladeluftaufnehmer
4 Abgasrohr
5 Turbolader
6 Abgasturbine
7 Welle
8 Auspuffrohr
9 Verdichter
10 Ansaugleitung
11 Ladeluftleitung
12 Bypasssteuergehäuse
13 Ladeluftkühler
14 Bypassleitung
15 Schwungrad
16 Elektrischer Signalgeber mit Verstärker
17 Signalleitung
18 Ventilöffnung
19 Bypassventil
20 Betätigungszylinder
21 Druckfeder
22 Kolben
23 Zuleitung des Arbeitsmittels
24 Ableitung des Arbeitsmittels
25 Einstellbares Drosselventil
26 Steuerdrosselventil
27 Proportionalmagnet
28 Druckfeder

## Patentanspruch

Bypasssteuereinrichtung für turboaufgeladene Verbrennungsmotoren mit einer von der Motordrehzahl abhängigen Öffnungscharakteristik für ein Bypassventil in einer Bypassleitung, die eine stromabwärts des Verdichters liegende Stelle der Ladeluftleitung mit einer vor dem Turbineneintritt befindlichen Stelle der Abgasleitung verbindet, gekennzeichnet durch eine zur Aufnahme eines Fluidstromes bestimmte Leitung, welches Fluid als Arbeitsmittel zur Betätigung des Bypassventils (19) dient und von einer motorabhängigen oder einer äusseren Fluidquelle stammt, durch einen zwischen der Zuleitung (23) und der Ableitung (24) der genannten Leitung liegenden Abschnitt mit einem fest einstellbaren Drosselventil (25) und einem federbelasteten Steuerdrosselventil (26), einen elektrischen Signalgeber mit Verstärker (16) sowie durch einen vom Verstärker über eine Signalleitung (17) gespeisten Proportionalmagneten (27), dessen Anker mit dem Steuerdrosselventil (26) starr verbunden ist.

## Claim

Bypass control device for turbo-supercharged internal combustion engines, having characteristics depending on the engine speed for opening a bypass valve in a bypass line which connects a point, located downstream of the compressor, of the supercharging-air line to a point, located upstream of the turbine inlet, of the exhaust gas line, characterised by a line intended to carry a stream of a fluid which serves as the working medium for actuating the bypass valve (19) and comes from an engine-dependent or an external fluid source, by a section which is located between the inlet (23) and the outlet (24) of the said line and has a throttle valve (25) which can be set to fixed positions, and a spring-loaded control throttle valve (26), an electrical signal emitter with amplifier (16) and by a proportional magnet (27) which is fed from the amplifier via a signal line (17) and the armature of which is rigidly connected to the control throttle valve (26).

## Revendication

Dispositif de commande de dérivation pour moteurs à combustion interne suralimentés par turbocompresseur, présentant une caractéristique d'ouverture dépendant du régime du moteur pour une valve de dérivation dans une conduite de dérivation qui raccorde un endroit de la conduite d'air de suralimentation située en aval du compresseur à un endroit de la conduite de gaz d'échappement précédant l'entrée de la turbine, caractérisé par une conduite destinée à recevoir un flux de fluide, ce fluide servant d'agent de travail pour l'actionnement de la valve de dérivation (19) et provenant d'une source de fluide dépendant du moteur ou d'une source de fluide extérieur, par un segment situé entre l'admission (23) et l'évacuation (24) de ladite conduite et contenant une valve d'étranglement réglable fixe (25) et une valve d'étranglement de commande à ressort (26), ainsi qu'un générateur de signaux électriques avec amplificateur (16) et par un aimant proportionnel alimenté par l'amplificateur par l'intermédiaire d'une ligne de signalisation (17), l'armature de cet aimant étant reliée rigidement à la valve d'étranglement de commande (26).

FIG.1

FIG.2